# EUROPÄISCHE PATENTANMELDUNG

(11) **EP 3 106 259 A1**
(43) Veröffentlichungstag der Anmeldung: **21.12.2016**
(21) Anmeldenummer: 16001193.8
(22) Anmeldetag: 25.05.2016
(51) Int. Cl.: B23Q 1/60

(54) **VORRICHTUNG UND VERFAHREN ZUR SPANABHEBENDEN BEARBEITUNG VON WERKSTÜCKEN**

(30) Priorität: 08.06.2015 DE 102015007442
(71) Anmelder: DEPO GmbH & Co. KG, 33428 Marienfeld (DE)
(72) Erfinder: Krieft, Martin, 33428 Harsewinkel (DE)
(74) Vertreter: Thielking & Elbertzhagen Patentanwälte Partnerschaft mbB

(57) **Zusammenfassung**

Vorrichtung (1) zur spanabhebenden Bearbeitung von, vorzugsweise metallischen, Werkstücken, mit einer Werkstückaufnahme (2) zur Aufnahme eines zu bearbeitenden Werkstücks und einem Bearbeitungskopf (3) zur spanabhebenden Bearbeitung des Werkstücks, wobei der Bearbeitungskopf (3) zur Bearbeitung des Werkstücks, vorzugsweise in drei zueinander senkrechte Richtungen (X, Y, Z), verfahrbar ist,
**dadurch gekennzeichnet**,
dass die Vorrichtung (1) eine Positioniereinrichtung (11) zur wahlweisen Positionierung der Werkstückaufnahme (2) in einer ersten Bearbeitungsposition oder einer zweiten Bearbeitungsposition aufweist, wobei die zweite Bearbeitungsposition gegenüber der ersten Bearbeitungsposition erhöht und in einer ersten horizontalen Richtung (X) versetzt ist, wobei die Vorrichtung eine Linearführung (12) zum Verfahren der Werkstückaufnahme (2) zwischen der ersten Bearbeitungsposition und der zweiten Bearbeitungsposition aufweist.

## Beschreibung

Die Erfindung betrifft eine Vorrichtung und ein Verfahren zur spanabhebenden Bearbeitung von Werkstücken nach den Oberbegriffen der unabhängigen Ansprüche.

Spanabhebende Verfahren, insbesondere Fräsverfahren, eignen sich, um Werkstücken nahezu beliebige räumliche Formen zu geben. Insbesondere wenn Werkstücke aus metallischen Werkstoffen verarbeitet werden, können dabei auch hohe Anforderungen an die Maßhaltigkeit und die Toleranzen der Werkstücke realisiert werden.

Bei den in Rede stehenden Verfahren gibt es dabei grundsätzlich zwei verschiedende Herangehensweisen, um die für die Bearbeitung notwendigen Relativbewegungen, insbesondere die Vorschubbewegungen, zwischen Werkstück und Werkzeug zu realisieren. Zum Einen ist es möglich, das Werkstück relativ zum Werkzeug zu bewegen, zum Anderen ist es möglich, das Werkzeug relativ zum Werkstück zu bewegen. Grundsätzlich sind natürlich auch Mischkonzepte möglich.

Typischerweise ist es dabei vorteilhaft, die Vorrichtungen und Verfahren so auszulegen, dass möglichst geringe Massen bewegt werden müssen. Die zu bewegenden Massen resultieren dabei regelmäßig nicht nur aus der Masse des Werkstücks und des Werkzeugs, sondern auch aus der Masse von zu bewegenden Maschinenelementen, wie Werkstück- oder Werkzeugaufnahmen, Spannfuttern, Antrieben und ähnlichem. Die Massen dieser Komponenten können die Massen der Werkstücke und Werkzeuge selbst regelmäßig deutlich übersteigen, so dass die Konzeptionierung einer Vorrichtung zur spanabhebenden Bearbeitung von Werkstücken häufig auch primär nach weiteren Erfordernissen, beispielsweise einer sinnvollen Integrierbarkeit in einen bestehenden Produktionsprozess erfolgt.

Bei der Bearbeitung sehr großer und/oder massereicher Werkstücke ist es jedoch so, dass regelmäßig das Werkzeug um das stillstehende Werkstück herumbewegt wird. Zu diesem Zweck befinden sich die Werkzeuge regelmäßig in Werkzeugaufnahmen, die so an den in Rede stehenden Vorrichtungen gelagert sind, dass sie über vergleichsweise große Strecken an den Werkstücken entlang bewegt werden können. Dies bedingt regelmäßig auslegerartige Maschinenelemente, um die Verfahrwege zu überbrücken. Diese auslegerartigen Elemente üben jedoch aufgrund ihrer Hebelarmwirkung vergleichsweise große Kräfte auf ihre Lagerung aus, die aus der Bearbeitung, insbesondere den Reaktionskräften und Vibrationen der Werkzeuge resultieren. Dies führt zu Verwindungen, die sich negativ auf die Genauigkeit der Bearbeitung auswirken.

Der Erfindung liegt daher die Aufgabe zugrunde, eine Vorrichtung und ein Verfahren der eingangs genannten Art aufzuzeigen, bei denen die vorstehend genannten Nachteile nicht oder zumindest in vermindertem Umfang auftreten.

Die Aufgabe wird gelöst durch eine Vorrichtung und ein Verfahren mit den Merkmalen der unabhängigen Ansprüche. Die Merkmale der unabhängigen Ansprüche betreffen vorteilhafte Ausführungsformen.

Die erfindungsgemäße Vorrichtung weist eine Positioniereinrichtung auf. Mit dieser Positioniereinrichtung kann das Werkstück wahlweise in einer ersten oder einer zweiten Bearbeitungsposition positioniert werden. Erfindungsgemäß ist dabei vorgesehen, dass die zweite Bearbeitungsposition gegenüber der ersten Bearbeitungsposition erhöht und in einer ersten horizontalen Richtung versetzt ist. Es versteht sich, dass mit der erfindungsgemäßen Vorrichtung auch weitere Bearbeitungspositionen möglich sind.

Hierdurch wird eine Umpositionierung des Werkstücks während der Bearbeitung ermöglicht. Das Werkzeug kann so in der ersten Bearbeitungsposition von oben am Werkstück angreifen und in der zweiten Bearbeitungsposition seitlich am Werkzeug angreifen. Durch die Umpositionierung des Werkstücks kann sich so das Werkzeug bei der Bearbeitung des Werkstücks von oben bzw. bei der Bearbeitung der Oberseite des Werkstücks in einer ähnlichen Position befinden, wie bei der Bearbeitung des Werkstücks von der Seite bzw. bei der Bearbeitung des Werkstücks aus einer horizontalen Richtung.

Hierdurch entfällt die Notwendigkeit, das Werkzeug während der Bearbeitung über derart lange Wege zu verfahren oder gar das Werkstück umzuspannen, wie es bei einer herkömmlichen Vorrichtung der in Rede stehenden Art notwendig ist, um eine Bearbeitung des Werkstücks sowohl von dessen Oberseite als auch von dessen seitlichen Seiten zu ermöglichen.

Die Bearbeitungspositionen werden dabei in vorteilhafter Weise so gewählt, dass etwaige Hebel vom Werkzeug ausgehender Kräfte auf die tragenden Teile der Vorrichtung möglichst kurz gehalten werden. Auf diese Weise wird die Steifigkeit erhöht, Vibrationen vermindert und die Bearbeitungsgenauigkeit erhöht.

Besonders vorteilhaft lassen sich die erfindungsgemäße Vorrichtung und das erfindungsgemäße Verfahren bei Werkstücken einsetzen, deren Gesamtmasse 100 kg vorzugsweise 500 kg und/ oder deren größte Abmessung 0,5 m vorzugsweise 1 m übersteigt. Bei derartigen Werkstücken ist es regelmäßig nicht sinnvoll, die für die Bearbeitung notwendige Relativbewegung zwischen Werkstück und Werkzeug alleine durch die Bewegung des Werkstücks herbeizuführen. Allein aufgrund der Masse des Werkstücks ließen sich damit nur sehr niedrige Vorschubgeschwindigkeiten erzielen, zudem wären die Antriebe hierfür vergleichsweise teuer. Während der Bearbeitung ist für die Vorschubbewegung daher eine entsprechende Bewegung des Werkzeugs sinnvoll. Die bloße Umpositionierung des Werkstücks zwischen den Bearbeitungsschritten für die Oberseite und den seitlichen Bereich des Werkstücks lassen sich dagegen vergleichsweise kostengünstig auch für große bzw. schwere Werkstücke realisieren.

In vorteilhafter Weise lässt sich die erfindungsgemäße Vorrichtung realisieren, wenn die Vorrichtung eine Linearführung aufweist, mit der die Werkstückaufnahme zwischen der ersten Bearbeitungsposition und der zweiten Bearbeitungsposition verfahren werden kann. Eine solche Linearführung weist dann vorzugsweise eine Steigung auf, so dass die erste Bearbeitungsposition und die zweite Bearbeitungsposition durch eine geradlinige Bewegungsbahn der Werkstückaufnahme verbunden sind.

Es ist vorteilhaft, wenn der Bearbeitungskopf eine um eine horizontale Achse schwenkbare Werkzeugaufnahme aufweist. Durch das Verschwenken der Werkzeugaufnahme um die horizontale Achse ist es möglich, ein in der Werkzeugaufnahme aufgenommenes Werkzeug wahlweise auf ein unterhalb des Bearbeitungskopfes befindliches Werkstück oder auf ein seitlich des Bearbeitungskopfes befindliches Werkstück auszurichten.

Die Werkzeugaufnahme des Bearbeitungskopfs ist vorzugsweise um eine vertikale Achse schwenkbar, was die Möglichkeiten, das Werkzeug gezielt auf das Werkstück auszurichten, um eine gewünschte Werkzeugkontur durch die spanabhebende Bearbeitung zu erzeugen, vervielfacht. Eine Möglichkeit, einen derartigen Bearbeitungskopf konstruktiv zu realisieren, ist die Verwendung des Gabelkopfes. Dabei ist vorzugsweise die Gabel, welche die horizontale Schwenkachse für die Werkzeugaufnahme zur Verfügung stellt, um eine vertikale Achse schwenkbar gelagert.

Vorzugsweise ist der Bearbeitungskopf an einer Traverse aufgenommen. Die Lagerung des Bearbeitungskopfs an einer Traverse ermöglicht eine verhältnismäßig steife Lagerung, da die Traverse an wenigstens zwei beabstandeten Auflagerpunkten durch Tragstrukturen gestützt ist. Vorzugsweise handelt es sich dabei um zwei Tragstrukturen, die weiter vorzugsweise beidseits des Arbeitsraumes der Vorrichtung angeordnet sind. Eine solche beidseits des Arbeitsraumes angeordnete Lagerung der Traverse führt zu einer steifen Konstruktion.

Es ist vorteilhaft, wenn die Traverse in einer horizontalen Richtung verfahrbar an den Tragstrukturen angeordnet ist. So können in vorteilhafter Weise Vorschubbewegungen durch das Verfahren der Traverse realisiert werden.

Ebenfalls ist es vorteilhaft, wenn der Bearbeitungskopf in einer vertikalen Richtung verfahrbar an der Traverse aufgenommen ist. Durch diese Verfahrbarkeit des Bearbeitungskopfs können ebenfalls Vorschubbewegungen des Bearbeitungskopfs realisiert werden.

Die Werkstückaufnahme ist vorzugsweise um eine vertikale Achse drehbar. Dies führt dazu, dass das Werkstück insbesondere in der zweiten Bearbeitungsposition um die vertikale Achse gedreht werden kann. Hierdurch wird es möglich, das Werkstück von allen Seiten mit dem Bearbeitungskopf auch in solchen Fällen zu bearbeiten, in denen über reine Verfahrbewegungen des Bearbeitungskopfes nicht alle zu bearbeitenden seitlichen Bereiche des Werkstücks zugänglich sind. Ähnlich wie im Fall der Positioniereinrichtung gilt auch für die Drehbarkeit der Werkstückaufnahme, dass die Vorschubbewegung vorteilhafterweise durch die Bewegung des Werkzeugs erzeugt wird. Unter einer vorwiegenden Erzeugung der Vorschubbewegung durch das Werkzeug ist in diesem Zusammenhang zu verstehen, dass der Beitrag, den die Bewegung des Werkzeugs zu der Relativbewegung zwischen Werkstück und Werkzeug in der Bearbeitungszone, also der Vorschubgeschwindigkeit, leistet, größer ist als der Beitrag durch die Positioniereinrichtung und/oder die drehbare Werkstückaufnahme. Die Eigenrotation des Werkzeugs im Falle eines rotierenden Werkzeugs, wie beispielsweise einem Fräser, Bohrer oder ähnlichem, bleibt hierbei außer Betracht.

Vorzugsweise weist die Vorrichtung einen gemeinsamen Antrieb zum wahlweisen Antreiben der Drehbewegung der Werkstückaufnahme und der Verfahrbewegung der Werkstückaufnahme entlang der Linearführung auf. Ein solcher gemeinsamer Antrieb kann beispielsweise dadurch realisiert sein, dass sich der Antrieb durch geeignete Kupplungsmittel wahlweise mit einer Getriebeeinheit zum Drehen der Werkstückaufnahme oder mit einer Getriebeeinheit zum Verfahren der Werkstückaufnahme entlang der Linearführung verbinden lässt. Hierdurch kann in vorteilhafter Weise ein Antrieb entfallen, was die Kosten einer erfindungsgemäßen Vorrichtung senkt.

Besonders bevorzugt ist die Positioniereinrichtung lösbar an der Vorrichtung aufgenommen. Unter einer lösbaren Aufnahme der Vorrichtung ist dabei insbesondere zu verstehen, dass die Positioniereinrichtung an üblichen Aufnahmemitteln für wechselbare Werkstückspannvorrichtungen, wie mit Nuten versehenen Arbeitstischen, aufgenommen ist. Insbesondere sind unter einer lösbaren Aufnahme Befestigungen der Positioniereinrichtung an der Vorrichtung zu verstehen, die nach Art einer universellen Befestigung zur Befestigung der Positioniereinrichtung an einer Vielzahl unterschiedlicher Vorrichtungstypen und/oder derart gestaltet sind, dass sich aus der Gestaltung der Befestigung eine bestimmungsgemäße Verwendung der Positioniereinrichtung als Zubehör und/oder Nachrüstteil der Vorrichtung ergibt. Unter letzterem ist zu verstehen, dass die Positioniereinrichtung bei Bedarf, also beispielsweise zur Fertigung eines konkreten Werkstücks, an der Vorrichtung montiert wird und/oder dass bestehende Vorrichtungen in einfacher Weise mit einer Positioniereinrichtung nachrüstbar sind, so dass eine erfindungsgemäße Vorrichtung entsteht.

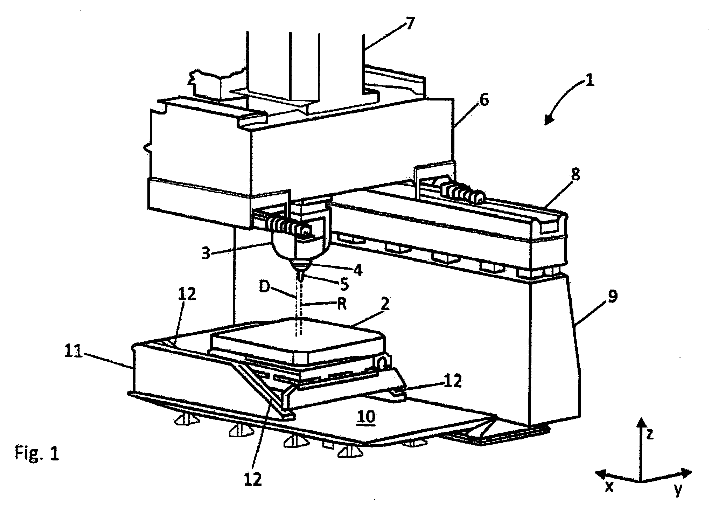

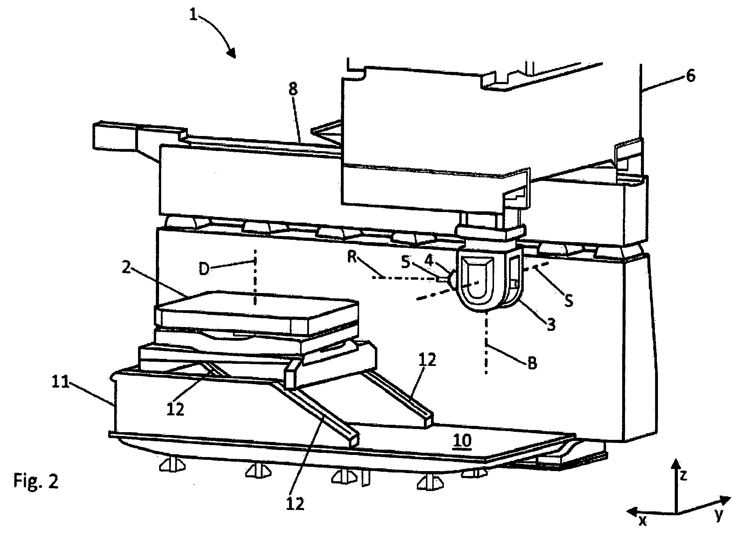

Die Erfindung wird im Folgenden anhand der Figuren 1 und 2 schematisch näher erläutert.
Fig. 1 zeigt eine schematische Darstellung einer beispielhaften erfindungsgemäßen Vorrichtung mit der Werkstückaufnahme in der ersten Bearbeitungsposition.
Fig. 2 zeigt die in Fig. 1 dargestellte beispielhafte erfindungsgemäße Vorrichtung mit der Werkstückaufnahme in der zweiten Bearbeitungsposition.

Die beispielhafte erfindungsgemäße Vorrichtung 1 weist eine Werkstückaufnahme 2 zur Aufnahme eines zu bearbeitenden Werkstücks auf. Im gezeigten Beispiel ist die Werkstückaufnahme 2 um die zur senkrechten Richtung Z parallele Drehachse D drehbar.

Ferner weist die beispielhafte erfindungsgemäße Vorrichtung 2 einen Bearbeitungskopf 3 auf. Dieser ist im gezeigten Beispiel in vorteilhafter Weise als Gabelkopf ausgestaltet. Dabei weist der Bearbeitungskopf 3 eine Werkzeugaufnahme 4 auf, in der ein Werkzeug 5 vorzugsweise um die Rotationsachse R rotierbar aufgenommen werden kann. Die Werkzeugaufnahme 4 ist dabei bevorzugt um die Schwenkachse S schwenkbar am Bearbeitungskopf 3 aufgenommen. Im gezeigten Beispiel ist der Bearbeitungskopf 3 in vorteilhafter Weise um die Bearbeitungskopfdrehachse schwenkbar. Dies führt vorzugsweise dazu, dass die Schwenkachse S jede Richtung in der von den horizontalen Richtungen X und Y aufgespannten Ebene einnehmen kann.

Darüber hinaus ist der Bearbeitungskopf 3 in den drei zueinander senkrechten Richtungen X, Y und Z bewegbar bzw. verfahrbar. Im gezeigten Beispiel ist der Bearbeitungskopf 3 in vorteilhafter Weise an der Traverse 6 aufgenommen. Vorteilhafterweise ist der Bearbeitungskopf 3 relativ zur Traverse 6 in Richtung Z (durch den Linearantrieb 7) und/oder in Richtung Y verfahrbar. Der Antrieb für die Rotationsbewegung des Werkzeugs 5 um die Rotationsachse R ist im gezeigten Beispiel in vorteilhafter Weise im Bearbeitungskopf 3 angeordnet.

Die Traverse 6 ist relativ zur Vorrichtung 1 entlang der ersten horizontalen Richtung X verfahrbar. Im gezeigten Beispiel wird das durch Führungen 8 realisiert, welche die Traverse 6 in der ersten horizontalen Richtung X verfahrbar auf Tragstrukturen 9 lagern. Die Tragstrukturen 9 sind beidseits des Arbeitsraums der Vorrichtung 1 angeordnet. Dieser erstreckt sich oberhalb der Aufnahmefläche 10.

Die Aufnahmefläche 10 ist dabei vorzugsweise so gestaltet, dass sie eine Befestigungsmöglichkeit für eine Werkstückaufnahme bietet, so kann sie beispielsweise Nuten aufweisen, mit denen eine Werkstückaufnahme oder ähnliches mit der Aufnahmefläche 10 verbunden werden kann,

In den Fig. 1 und 2 ist die Tragstruktur 9 mit der Führung 8 im Vordergrund der jeweiligen Abbildung weggelassen worden und nur die Tragstruktur 9 und die Führung 8 im Hintergrund der beispielhaften Vorrichtung 1 dargestellt. Die reale beispielhafte Vorrichtung 1 ist hinsichtlich der Tragstrukturen 9 und der Führung 8 zumindest im Wesentlichen spiegelsymmetrisch aufgebaut.

Die beispielhafte erfindungsgemäße Vorrichtung 1 weist eine Positioniereinrichtung 11 auf, um die Werkstückaufnahme 2 wahlweise in der ersten Bearbeitungsposition (Fig. 1) oder in der zweiten Bearbeitungsposition (Fig. 2) zu positionieren. Die beispielhafte erfindungsgemäße Positioniereinrichtung 11 weist dabei in vorteilhafter Weise Linearführungen 12 auf, welche die Verfahrbarkeit der Werkzeugaufnahme 2 zwischen der ersten und der zweiten Bearbeitungsposition ermöglichen. Die Positioniereinrichtung 11 ist in vorteilhafter Weise auf der Aufnahmefläche 10 lösbar angeordnet.

In der Positioniereinrichtung kann, wie in den Fig. 1 und 2 dargestellt, das Werkstück wahlweise unterhalb des Bearbeitungskopfs 3 (erste Bearbeitungsposition, Fig. 1) oder auf etwa gleicher Höhe wie der Bearbeitungskopf 3 (zweite Bearbeitungsposition, Fig. 2) positioniert werden. Dadurch wird die Bearbeitung eines Werkstücks von oben und von der Seite möglich, ohne dass der Bearbeitungskopf 3 in der vertikalen Richtung Z derart weit abgesenkt werden muss, wie es beim Verzicht auf die erfindungsgemäße Positioniereinrichtung der Fall wäre, um ein Werkstück sowohl von oben wie auch von der Seite zu erreichen. Der Abstand zwischen dem Bearbeitungskopf 3 und der Traverse 6 ist so während der Bearbeitung insgesamt geringer, wodurch die Hebelkräfte, die insbesondere auf die verfahrbare Lagerung des Bearbeitungskopfes 3 in der Traverse 6 ausgeübt werden, reduziert werden. Dies gilt insbesondere für Schwingungen, die durch das rotierende Werkzeug 5 während der Bearbeitung ausgelöst werden. Insgesamt wird so eine genauere Bearbeitung aufgrund der steiferen Lagerung des Werkzeugs 5 ermöglicht.

### Bezugszeichenliste:

- 1: Vorrichtung
- 2: Werkstückaufnahme
- 3: Bearbeitungskopf
- 4: Werkzeugaufnahme
- 5: Werkzeug
- 6: Traverse
- 7: Linearantrieb
- 8: Führung
- 9: Tragstrukturen
- 10: Aufnahmefläche
- 11: Positioniereinrichtung
- 12: Linearführung

- D: Drehachse
- R: Rotationsachse
- S: Schwenkachse
- B: Bearbeitungskopfdrehachse
- X: erste horizontale Richtung
- Y: zweite horizontale Richtung
- Z: vertikale Richtung

## Patentansprüche

1. Vorrichtung (1) zur spanabhebenden Bearbeitung von, vorzugsweise metallischen, Werkstücken, mit einer Werkstückaufnahme (2) zur Aufnahme eines zu bearbeitenden Werkstücks und einem Bearbeitungskopf (3) zur spanabhebenden Bearbeitung des Werkstücks, wobei der Bearbeitungskopf (3) zur Bearbeitung des Werkstücks, vorzugsweise in drei zueinander senkrechte Richtungen (X, Y, Z), verfahrbar ist,
**dadurch gekennzeichnet,**
**dass** die Vorrichtung (1) eine Positioniereinrichtung (11) zur wahlweisen Positionierung der Werkstückaufnahme (2) in einer ersten Bearbeitungsposition oder einer zweiten Bearbeitungsposition aufweist, wobei die zweite Bearbeitungsposition gegenüber der ersten Bearbeitungsposition erhöht und in einer ersten horizontalen Richtung (X) versetzt ist, wobei die Vorrichtung eine Linearführung (12) zum Verfahren der Werkstückaufnahme (2) zwischen der ersten Bearbeitungsposition und der zweiten Bearbeitungsposition aufweist.

2. Vorrichtung (1) nach Anspruch 1,
**dadurch gekennzeichnet,**
**dass** die Positioniereinrichtung (11) die Linearführung (12) zum Verfahren der Werkstückaufnahme (2) zwischen der ersten Bearbeitungsposition und der zweiten Bearbeitungsposition aufweist.

3. Vorrichtung (1) nach Anspruch 1 oder 2,
**dadurch gekennzeichnet,**
**dass** der Bearbeitungskopf (3) eine um eine horizontale Achse (5) und/oder eine vertikale Achse (8) schwenkbare Werkzeugaufnahme (4) aufweist, die vorzugsweise ein Schwenkkopf, insbesondere ein Gabelkopf ist.

4. Vorrichtung (1) nach einem der vorigen Ansprüche,
**dadurch gekennzeichnet,**
**dass** die Werkstückaufnahme (2) um eine vertikale Achse (D) drehbar ist.

5. Vorrichtung (1) nach Anspruch 4,
**dadurch gekennzeichnet,**
**dass** die Vorrichtung einen gemeinsamen Antrieb zum wahlweisen Antreiben der Drehbewegung der Werkstückaufnahme (2) und der Verfahrbewegung der Werkstückaufnahme (2) entlang der Linearführung aufweist.

6. Vorrichtung (1) nach einem der vorigen Ansprüche,
**dadurch gekennzeichnet,**
**dass** die Positioniereinrichtung (11) lösbar an der Vorrichtung (1) aufgenommen ist.

7. Vorrichtung (1) nach einem der vorigen Ansprüche,
**dadurch gekennzeichnet,**
**dass** der Bearbeitungskopf (3) an einer Traverse (6), vorzugsweise in einer vertikalen Richtung (Z) und/oder einer horizontalen Richtung (Y) verfahrbar, aufgenommen ist.

8. Vorrichtung (1) nach einem der vorigen Ansprüche,
**dadurch gekennzeichnet,**
**dass** die Traverse (6) an zwei, vorzugsweise beidseits des Arbeitsraumes der Vorrichtung angeordneten, Tragstrukturen (9), vorzugsweise in einer horizontalen Richtung (X), insbesondere der ersten horizontalen Richtung (X), verfahrbar angeordnet ist.

9. Verfahren zur spanabhebenden Bearbeitung eines, vorzugsweise metallischen, Werkstücks, insbesondere mit einer Vorrichtung (1) nach einem der vorigen Ansprüche, wobei das Werkstück mittels einer Linearführung (12) zunächst in einer ersten Bearbeitungsposition und danach einer zweiten Bearbeitungsposition oder zunächst in der zweiten und danach in der ersten Bearbeitungsposition positioniert wird, wobei die zweite Bearbeitungsposition gegenüber der ersten Bearbeitungsposition erhöht und in einer ersten horizontalen Richtung versetzt ist, wobei ein Bearbeitungskopf (3) das Werkstück mit einem, vorzugsweise rotierenden, spanabhebenden Werkzeug (5) von oben bearbeitet, während sich dieses in der ersten Bearbeitungsposition befindet und wobei der Bearbeitungskopf (3) das Werkstück aus einer horizontalen Richtung (X, Y), vorzugsweise der ersten horizontalen Richtung (X), mit dem spanabhebenden Werkzeug (5) bearbeitet, wenn sich das Werkstück in der zweiten Bearbeitungsposition befindet.

10. Verfahren nach Anspruch 9,
**dadurch gekennzeichnet,**
**dass** die Vorschubbewegung des Werkzeugs (5) relativ zu dem Werkstück während der spanabhebenden Bearbeitung vorwiegend, vorzugsweise ausschließlich, durch die Bewegung des Werkzeugs (5) erzeugt wird, insbesondere nicht durch die Positioniereinrichtung (11) erzeugt wird.

11. Verfahren nach Anspruch 9 oder 10,
**dadurch gekennzeichnet,**
**dass** das Werkstück vor der Bearbeitung ein Gewicht von wenigstens 100 kg, vorzugsweise von wenigstens 500 kg aufweist und/oder eine größte Abmessung von wenigstens 0,5 m, vorzugsweise wenigstens 1 m aufweist.
